(19) Europäisches Patentamt
European Patent Office
Office européen des brevets

(11) **EP 1 152 935 B1**

(12) **EUROPÄISCHE PATENTSCHRIFT**

(45) Veröffentlichungstag und Bekanntmachung des Hinweises auf die Patenterteilung:
**11.11.2009 Patentblatt 2009/46**

(21) Anmeldenummer: **00983251.0**

(22) Anmeldetag: **08.12.2000**

(51) Int Cl.:
**B60T 8/172** (2006.01)

(86) Internationale Anmeldenummer:
**PCT/EP2000/012365**

(87) Internationale Veröffentlichungsnummer:
**WO 2001/042067 (14.06.2001 Gazette 2001/24)**

(54) **VERFAHREN UND VORRICHTUNG ZUM ERMITTELN EINER GESCHWINDIGKEITSGRÖSSE MINDESTENS EINES ANGETRIEBENEN RADES EINES KRAFTFAHRZEUGS**

METHOD AND DEVICE FOR DETERMINING A SPEED PARAMETER OF AT LEAST ONE POWERED WHEEL PERTAINING TO A VEHICLE

PROCEDE ET DISPOSITIF POUR DETERMINER UNE GRANDEUR DECRIVANT LA VITESSE D'AU MOINS UNE ROUE MOTRICE D'UN VEHICULE AUTOMOBILE

(84) Benannte Vertragsstaaten:
**DE FR GB**

(30) Priorität: **08.12.1999 DE 19959018**

(43) Veröffentlichungstag der Anmeldung:
**14.11.2001 Patentblatt 2001/46**

(73) Patentinhaber: **ROBERT BOSCH GMBH**
**70469 Stuttgart (DE)**

(72) Erfinder: **ERBAN, Andreas**
**74321 Bietigheim-Bissingen (DE)**

(56) Entgegenhaltungen:
**EP-A- 0 654 622   DE-A- 19 726 743**

• **PATENT ABSTRACTS OF JAPAN vol. 1997, no. 04, 30. April 1997 (1997-04-30) & JP 08 318836 A (MAZDA MOTOR CORP), 3. Dezember 1996 (1996-12-03)**

## Beschreibung

### Stand der Technik

Die vorliegende Erfindung betrifft ein Verfahren und eine Vorrichtung zum Ermitteln einer Größe, die die Geschwindigkeit mindestens eines angetriebenen Rades eines Kraftfahrzeugs beschreibt. Bei dem Verfahren und der Vorrichtung werden für die übrigen angetriebenen Räder des Kraftfahrzeugs Größen ermittelt, die die jeweiligen Radgeschwindigkeiten beschreiben. Des weiteren wird eine Größe ermittelt, die die Abtriebsdrehzahl eines Getriebes des Kraftfahrzeugs beschreibt.

Die Erfindung betrifft außerdem ein Steuergerät für ein Antriebsschlupfregelsystem oder ein Fahrdynamikregelsystem eines Kraftfahrzeugs. Das Steuergerät ermittelt zur Regelung des Antriebsschlupfes bzw. der Fahrdynamik eine Größe, die die Geschwindigkeit mindestens eines angetriebenen Rades des Kraftfahrzeugs beschreibt. Dem Steuergerät stehen für die übrigen angetriebenen Räder des Kraftfahrzeugs die jeweiligen Radgeschwindigkeiten beschreibende Größen und eine die Abtriebsdrehzahl eines Getriebes des Kraftfahrzeugs beschreibende Größe zur Verfügung.

Die vorliegende Erfindung betrifft des weiteren ein Speicherelement für ein Steuergerät eines Antriebsschlupfregelsystems oder eines Fahrdynamikregelsystems eines Kraftfahrzeugs. Das Speicherelement ist insbesondere als ein Read-Only-Memory, ein Random-Access-Memory oder ein Flash-Memory ausgebildet. Auf dem Speicherelement ist ein Computerprogramm abgespeichert, das auf einem Rechengerät, insbesondere auf einem Mikroprozessor, ablauffähig ist.

Schließlich betrifft die Erfindung auch ein Computerprogramm, das auf einem Rechengerät, insbesondere auf einem Mikroprozessor, ablauffähig ist.

### Stand der Technik

Verfahren und Vorrichtungen zum Ermitteln einer Geschwindigkeitsgröße mindestens eines angetriebenen Rades eines Kraftfahrzeugs sind in unterschiedlichen Ausführungsformen aus dem Stand der Technik bekannt.

So ist bspw. aus der DE 196 108 64 A1 ein Verfahren und eine Vorrichtung zum Ermitteln einer Radgeschwindigkeit bekannt. Dabei wird die Drehgeschwindigkeit mindestens eines von zwei Rädern einer Achse bestimmt. Hierzu wird eine die mittlere Drehgeschwindigkeit der beiden Räder repräsentierende erste Größe und eine die Fahrzeuggeschwindigkeit repräsentierende zweite Größe erfasst. Die Radgeschwindigkeit wird in Abhängigkeit von einem Vergleich der Differenz eines aus der ersten Größe abgeleiteten Wertes und eines aus der zweiten Größe abgeleiteten Wertes mit einem Schwellenwert. Bei Unterschreiten des Schwellenwertes wird die Drehbewegung des einen Rades zu Null und bei Überschreiten des Schwellenwertes zu einem von Null abweichenden Wert bestimmt.

Die aus der DE 196 108 64 A1 bekannte Ermittlung der Radgeschwindigkeit hat den Nachteil, dass eine die Fahrzeuggeschwindigkeit beschreibende Größe erforderlich ist. Um eine präzise Radgeschwindigkeit ermitteln zu können, ist eine präzise Ermittlung der Fahrzeuggeschwindigkeit erforderlich. Dies erfordert entweder sehr genaue Schätzverfahren, die die Fahrzeuggeschwindigkeit bspw. auf der Basis der Radgeschwindigkeiten ermitteln, oder aber spezielle Sensoren zur Ermittlung der Radgeschwindigkeiten, die jedoch aufwendig und deshalb teuer sind. Wenn die Fahrzeuggeschwindigkeit in Abhängigkeit der Radgeschwindigkeiten ermittelt wird, stehen als Ausgangsgrößen, ausgehend von denen die Drehgeschwindigkeit mindestens eines von zwei Rädern einer Achse ermittelt wird, lediglich Radgeschwindigkeiten zur Verfügung. Dadurch kann unter Umständen ein systematischer Fehler entstehen, da eine weitere, von den Raddrehzahlen unabhängige Größe in die Bestimmung der Drehzahlgeschwindigkeiten nicht eingeht.

Aus der DE 197 26 743 A1 ist ein Verfahren und eine Vorrichtung zur automatischen Bestimmung einer Differentialübersetzung zwischen einem Getriebe eines Kraftfahrzeugs und den Rädern bekannt. Dabei wird eine die Geschwindigkeit mindestens eines Rades beschreibende Größe und die Abtriebsdrehzahl des Getriebes erfasst. Des weiteren wird eine den Fahrzustand des Kraftfahrzeugs beschreibende Fahrzustandsgröße ermittelt. Falls ein im wesentlichen stationärer Fahrzustand vorliegt, wird die die Differentialübersetzung beschreibende Größe in Abhängigkeit der die Radgeschwindigkeit beschreibenden Größe und der Abtriebsdrehzahl des Getriebes ermittelt.

Der vorliegenden Erfindung liegt die Aufgabe zugrunde, die Ermittlung einer die Radgeschwindigkeit mindestens eines angetriebenen Rades eines Kraftfahrzeugs beschreibende Größe zu verbessern. Insbesondere soll eine Möglichkeit geschaffen werden, dass einem Antriebsschlupfregelsystem oder einem Fahrdynamikregelsystem eines Kraftfahrzeugs trotz Ausfall eines an einem der Räder angeordneten Drehzahlsensors eine zuverlässige die Geschwindigkeitsgröße des Rades beschreibende Größe zur Verfügung gestellt werden kann.

Zur Lösung dieser Aufgabe schlägt die Erfindung ausgehend von dem Verfahren der eingangs genannten Art vor, dass für das mindestens eine angetriebene Rad die die Geschwindigkeit beschreibende Größe in Abhängigkeit der Größen, die die jeweiligen Radgeschwindigkeiten der übrigen angetriebenen Räder beschreiben, und in Abhängigkeit der Größe ermittelt wird, die die Getriebeabtriebsdrehzahl beschreibt.

### Vorteile der Erfindung

Die angetriebenen Räder eines Kraftfahrzeugs sind im allgemeinen über ein Differential fest mit der Abtriebsseite eines Getriebes verkoppelt. Dies gilt für den Frontantrieb (Front-Wheel-Drive, FWD) und einen Heckantrieb (Rear-Wheel-Drive, RWD). Bei einem Allradantrieb (All-Wheel-Drive, AWD) gibt es eine solche feste Verkopplung nur dann, wenn keine schlupfbehafteten Komponenten, wie bspw. eine Viscokupplung, in diesem Teil des Antriebsstranges integriert sind. Bei allradgetriebenen Fahrzeugen mit offenen Differentialen gibt es diese feste Verkopplung.

Die Ermittlung der die Geschwindigkeit des mindestens einen angetriebenen Rades beschreibenden Größe kann bei einer festen Verkopplung der angetriebenen Räder mit der Abtriebsseite des Getriebes ohne weiteres nach dem erfindungsgemäßen Verfahren erfolgen. Dazu werden die bekannten Größen herangezogen, die die jeweiligen Radgeschwindigkeiten der übrigen angetriebenen Räder beschreiben. Außerdem wird die die Getriebeabtriebsdrehzahl beschreibende Größe herangezogen. Diese Größen stehen in einem Steuergerät für das Getriebe oder für ein Antriebsschlupfregelsystem oder ein Fahrdynamikregelsystem in der Regel zur Verfügung und müssen nicht gesondert ermittelt werden.

Die Getriebeabtriebsdrehzahl ist mit einem geringen Aufwand und einer hohen Genauigkeit ermittelbar. Die Ermittlung erfolgt bspw. mittels eines an geeigneter Stelle am Getriebe angebrachten Drehzahlsensors.

Mit dem erfindungsgemäßen Verfahren kann die Funktionsfähigkeit von Raddrehzahlsensoren des Kraftfahrzeugs überprüft werden. Dazu kann reihum für alle Räder des Kraftfahrzeugs die Geschwindigkeitsgröße nach dem erfindungsgemäßen Verfahren ermittelt und mit der anhand des zu überprüfenden Raddrehzahlsensors ermittelten Geschwindigkeitsgröße verglichen werden.

Mit Hilfe des erfindungsgemäßen Verfahrens kann eine Ersatzgröße für eine direkt nicht zur Verfügung stehende Radgeschwindigkeit bzw. Raddrehzahl gebildet werden. Eine direkt ermittelte Größe steht bspw. bei einem defekten Raddrehzahlsensor nicht zur Verfügung. So kann mit dem erfindungsgemäßen Verfahren trotz Ausfall eines Raddrehzahlsensors eine zuverlässige Geschwindigkeitsgröße des Rades zur Verfügung gestellt werden. Dadurch kann die Systemverfügbarkeit eines Kraftfahrzeugs, insbesondere beim Ausfall eines Raddrehzahlsensors, erhöht werden. D.h. das Fahrzeug ist trotz des Ausfalls oder Defekts eines Raddrehzahlsensors weiterhin betriebsbereit. Insbesondere kann einem Antriebsschlupfregelsystem oder einem Fahrdynamikregelsystem eines Kraftfahrzeugs trotz Ausfall eines Raddrehzahlsensors eine zuverlässige die Geschwindigkeitsgröße des Rades beschreibende Größe zur Verfügung gestellt werden. Im Vergleich zu bisher eingesetzten Antriebsschlupfregelsystemen oder Fahrdynamikregelsystemen muss ein System bei dem erfindungsgemäßen Verfahren bei einem erkannten Raddrehzahlsensorfehler nicht mehr passiv geschaltet werden. Das System ist trotz eines solchen Fehlers bzw. Ausfalls des Raddrehzahlsensors weiterhin verfügbar und voll funktionsfähig.

Solche Antriebsschlupfregelsysteme oder Fahrdynamikregelsysteme sind bspw. aus der in der Automobiltechnischen Zeitschrift (ATZ) 96, 1994, Heft 11, auf den Seiten 674 bis 689 erschienenen Veröffentlichung "FDR - Die Fahrdynamikregelung von Bosch" bekannt. Mit einer dort beschriebenen Vorrichtung wird die Gierrate eines Kraftfahrzeugs geregelt. Zur Regelung der Gierrate des Fahrzeugs wird die gemessene Gierrate mit einem Sollwert für die Gierrate verglichen. Bei diesem Vergleich wird eine Regelabweichung der Gierrate ermittelt, in deren Abhängigkeit fahrerunabhängige radindividuelle Bremseneingriffe und/oder Motoreingriffe durchgeführt werden. Vor allem durch die fahrerunabhängigen radindividuellen Bremseneingriffe wird ein Giermoment auf das Fahrzeug ausgeübt, durch das sich die Ist-Gierrate annähert. Das beschriebene Fahrdynamikregelsystem ist mittlerweile weitläufig auch als ESP (Electronic Stability Program) bekannt.

Zusammenfassend kann gesagt werden: Es wird eine Ersatzgröße für die Geschwindigkeit oder die Drehzahl eines Rades eines Kraftfahrzeugs mit einem ausgefallenen Raddrehzahlsensor unter Verwendung der zensierten Drehzahl oder Geschwindigkeit der übrigen Räder und der Abtriebsdrehzahl eines Getriebes ermittelt. Das Getriebe ist vorzugsweise als ein automatisches Getriebe ausgebildet. Das erfindungsgemäße Verfahren funktioniert jedoch ebensogut mit einem Schaltgetriebe mit einer manuellen oder einer automatischen Betätigung.

Gemäß einer vorteilhaften Weiterbildung der Erfindung wird vorgeschlagen, dass in Abhängigkeit von der Getriebeabtriebsdrehzahl eine auf die Radebene bezogene, die Abtriebsgeschwindigkeit beschreibende Größe ermittelt wird und für das mindestens eine angetriebene Rad die die Geschwindigkeit beschreibende Größe in Abhängigkeit der Größen, die die jeweiligen Radgeschwindigkeiten der übrigen angetriebenen Räder beschreiben, und in Abhängigkeit der Größe ermittelt wird, die die Abtriebsgeschwindigkeit beschreibt.

Gemäß einer bevorzugten Ausführungsform der Erfindung wird vorgeschlagen, dass die auf die Radebene bezogene, die Abtriebsgeschwindigkeit beschreibende Größe anhand der Gleichung

$$V_{Abtr} = \frac{\pi}{30} \cdot \frac{R_{Rad}}{I_{Diff}} \cdot n_{Abtr}$$

ermittelt wird, wobei $R_{Rad}$ der Radius der Antriebsräder und $I_{Diff}$ wirksame(n) Differentialübersetzung(en) ist.

Bei einem Kraftfahrzeug mit Allradantrieb wird für das mindestens eine angetriebene Rad die die Geschwindigkeit beschreibende Größe vorteilhafterweise anhand der Gleichung

$$V_{RadDef} = 4 \cdot V_{Abtr} - \sum_{i=1}^{3} V_{Radi}$$

ermittelt.

Bei einem Kraftfahrzeug mit Frontantrieb oder mit Heckantrieb wird für das mindestens eine angetriebene Rad die die Geschwindigkeit beschreibende Größe vorteilhafterweise anhand der Gleichung

$$V_{RadDef} = 2 \cdot V_{Abtr} - V_{Rad}$$

ermittelt, wobei $V_{Rad}$ die Radgeschwindigkeit des angetriebenen Rades ist, dessen Radgeschwindigkeit nicht ermittelt werden soll, d.h. dessen Raddrehzahlsensor nicht defekt ist.

Als eine weitere Lösung der Aufgabe der vorliegenden Erfindung wird ausgehend von der Vorrichtung der eingangs genannten Art vorgeschlagen, dass die Vorrichtung für das mindestens eine angetriebene Rad die die Geschwindigkeit beschreibende Größe in Abhängigkeit der Größen, die die jeweiligen Radgeschwindigkeiten der übrigen angetriebenen Räder beschreiben, und in Abhängigkeit der Größe ermittelt, die die Getriebeabtriebsdrehzahl beschreibt.

Gemäß einer vorteilhaften Weiterbildung der vorliegenden Erfindung wird vorgeschlagen, dass die Vorrichtung Mittel zur Ausführung des erfindungsgemäßen Verfahrens aufweist.

Als noch eine Lösung der Aufgabe der vorliegenden Erfindung wird ausgehend von dem Steuergerät der eingangs genannten Art vorgeschlagen, dass das Steuergerät für das mindestens eine angetriebene Rad die die Geschwindigkeit beschreibende Größe in Abhängigkeit der Größen, die die jeweiligen Radgeschwindigkeiten der übrigen angetriebenen Räder beschreiben, und in Abhängigkeit der Größe ermittelt, die die Getriebeabtriebsdrehzahl beschreibt.

Gemäß einer vorteilhaften Weiterbildung der vorliegenden Erfindung wird vorgeschlagen, dass in dem Steuergerät Mittel zur Ausführung des erfindungsgemäßen Verfahrens realisiert sind.

Von besonderer Bedeutung ist die Realisierung des erfindungsgemäßen Verfahrens in der Form eines Speicherelements, das für ein Steuergerät eines Antriebsschlupfregelsystems oder eines Fahrdynamikregelsystems eines Kraftfahrzeugs vorgesehen ist. Dabei ist auf dem Speicherelement ein Computerprogramm abgespeichert, das auf einem Rechengerät, insbesondere auf einem Mikroprozessor, ablauffähig und zur Ausführung des erfindungsgemäßen Verfahrens geeignet ist. In diesem Fall wird also die Erfindung durch ein auf dem Speicherelement abgespeichertes Computerprogramm realisiert, so dass dieses mit dem Computerprogramm versehene Speicherelement in gleicher Weise die Erfindung darstellt wie das Verfahren, zu dessen Ausführung das Computerprogramm geeignet ist. Als Speicherelement kann insbesondere ein elektrisches Speichermedium zur Anwendung kommen, bspw. ein Read-Only-Memory, ein Random-Access-Memory oder ein Flash-Memory.

Die Erfindung betrifft auch ein Computerprogramm, das zur Ausführung des erfindungsgemäßen Verfahrens geeignet ist, wenn es auf einem Rechengerät, insbesondere auf einem Mikroprozessor, abläuft. Besonders bevorzugt ist dabei, wenn das Computerprogramm auf einem Speicherelement, insbesondere auf einem Flash-Memory, abgespeichert ist.

Zeichnungen

Weitere Merkmale, Anwendungsmöglichkeiten und Vorteile der Erfindung ergeben sich aus der nachfolgenden Beschreibung von Ausführungsbeispielen der Erfindung, die in der Zeichnung dargestellt sind. Dabei bilden alle beschriebenen oder dargestellten Merkmale für sich oder in beliebiger Kombination den Gegenstand der Erfindung, unabhängig von ihrer Zusammenfassung in den Patentansprüchen oder deren Rückbeziehung sowie unabhängig von ihrer Formulierung bzw. Darstellung in der Beschreibung bzw. in der Zeichnung. Es zeigen:

Figur 1    ein Blockschaltbild einer erfindungsgemäßen Vorrichtung; und

Figur 2    ein Ablaufdiagramm des erfindungsgemäßen Verfahrens.

Beschreibung der Ausführungsbeispiele

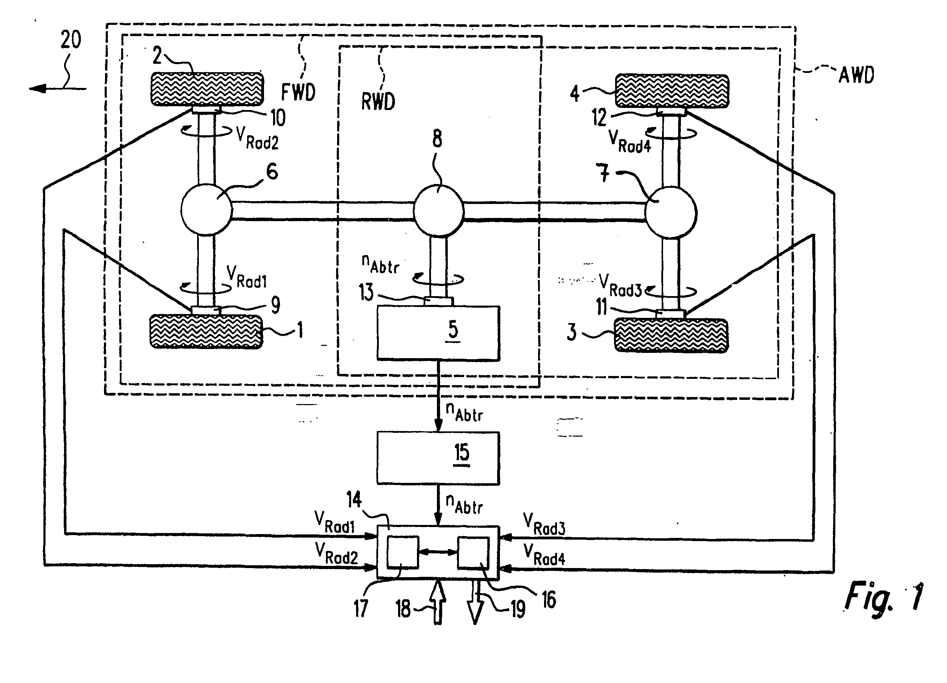

In Figur 1 ist ein Antriebsstrang eines Kraftfahrzeugs mit vier Rädern 1, 2, 3, 4 dargestellt. Die Fahrtrichtung des Kraftfahrzeugs ist mit einem Pfeil 20 bezeichnet. Bei dem Kraftfahrzeug können die Vorderräder (Front Wheel Drive, FWD), die Hinterräder (Rear Wheel Drive, RWD) oder Vorder- und Hinterräder (All Wheel Drive, AWD) angetrieben sein. Die angetriebenen Räder des FWD und des RWD sind im allgemeinen über ein Differential fest mit der Abtriebsseite eine Getriebes 5 verkoppelt. Beim AWD gibt es: eine feste Verkopplung nur dann, wenn keine schlupfbehafteten Komponenten, wie z.B. eine Flüssigkeitsreibungskupplung (sog. Viscokupplung), in diesem Teil des Antriebsstranges integiert sind. Bei allradgetriebenen Fahrzeugen mit offenen Differentialen gibt es diese feste Verkopplung. Wie in Figur 1 zu erkennen, weisen die einachsig angetriebenen, d.h. FWD und RWD, Kraftfahrzeuge zwei Differentiale 6, 7 auf.

Allradgetriebene, d.h. AWD, Fahrzeuge weisen drei Differentiale 6, 7, 8 auf.

Die beiden Vorderräder 1, 2 des Fahrzeugs weisen Radgeschwindigkeiten $V_{Rad1}$ und $V_{Rad2}$ auf. Die beiden Hinterräder weisen Radgeschwindigkeiten VRad3 und VRad4 auf. Die Geschwindigkeiten der Räder 1, 2, 3, 4 werden anhand der Drehzahlen $n_{Rad1}$, $n_{Rad2}$, $n_{Rad3}$, $n_{Rad4}$ und dem Radius $R_{Rad}$ der Räder 1, 2, 3, 4 ermittelt. Statt dem Radius $R_{Rad}$ kann auch der Durchmesser der Räder 1, 2, 3, 4 herangezogen werden. Die Drehzahlen $n_{Rad1}$, $n_{Rad2}$, $n_{Rad3}$, $n_{Rad4}$ der Räder 1, 2, 3, 4 werden mittels Drehzahlsensoren 9, 10, 11, 12 ermittelt, die im Bereich der Räder 1, 2, 3, 4 angeordnet sind. Das Getriebe 5 ist als ein automatisches Getriebe ausgebildet.

Das Getriebe 5 ist über einen Controller Area Network (CAN)-Bus 15 u.a. mit einem Steuergerät 14 eines Fahrdynamikregelsystems 14, das weitläufig auch als ESP (Electronic Stability Program) bekannt ist, verknüpft. Der Aufbau und die Funktionsweise eines ESP ist ausführlich in der Veröffentlichung "FDR - Die Fahrdynamikregelung von Bosch", a.a.O. beschrieben.

Unter der Voraussetzung, dass die Abtriebsdrehzahl n,Dt= des automatischen Getriebes 5 von einem eigenständigen Sensor 13 gemessen wird und alle angetriebenen Räder schlupffrei mit der Abtriebsseite des Getriebes 5 verkoppelt sind, kann nach dem erfindungsgemäßen Verfahren eine Ersatzgröße für einen ausgefallenen Drehzahlsensor 9, 10, 11 oder 12 gebildet werden. Voraussetzung dafür ist, dass das Rad 1, 2, 3 oder 4 mit dem defekten Drehzahlsensor ein mit dem Getriebe 5 verkoppeltes, also angetriebenes Rad ist.

Zur Ausführung des erfindungsgemäßen Verfahrens weist das Steuergerät 14 ein Speicherelement 16 und ein Rechengerät, insbesondere einen Mikroprozessor 17 auf. Das Speicherelement 16 ist bspw. als ein Flash-Memory ausgebildet. Auf dem Speicherelement 16 ist ein Computerprogramm abgespeichert, das auf dem Mikroprozessor 17 ablauffähig und zur Ausführung des erfindungsgemäßen Verfahrens geeignet ist. Zur Regelung der fahrdynamischen Stabilität des Kraftfahrzeugs werden dem Steuergerät 14 Eingangsgröße 18 zugeführt, die u.a. auch die Radgeschwindigkeiten $V_{Rad1}$, $V_{Rad2}$, $V_{Rad3}$, $V_{Rad4}$ und die Abtriebsdrehzahl $n_{Abtr}$ des Getriebes 5 umfassen. Anhand dieser Eingangsgrößen 18 ermittelt das Steuergerät 14 Ausgangsgrößen 19, bspw. zur Ansteuerung einer Brennkraftmaschine, einer Bremsanlage (insb. einer ABS-Bremsanlage) oder einer Lenkanlage (insb. einer Steer-by-Wire-Lenkanlage) des Kraftfahrzeugs.

Bei einem AWD-Kraftfahrzeug wird die die Geschwindigkeit $V_{RadDef}$ eines Rades 1, 2, 3 oder 4 mit einem defekten Raddrehzahlsensor 9, 10, 11 oder 12 beschreibende Ersatzgröße anhand der Gleichung

$$V_{RadDef} = 4 \cdot V_{Abtr} - \sum_{i=1}^{3} V_{Radi}$$

ermittelt, wobei $V_{Abtr}$ eine auf die Radebene bezogene, die Abtriebsgeschwindigkeit des Getriebes 5 beschreibende Größe ist, die anhand der Gleichung

$$V_{Abtr} = \frac{\pi}{30} \cdot \frac{R_{Rad}}{I_{Diff}} \cdot n_{Abtr}$$

ermittelt wird. $V_{RAdi}$ ist die Drehzahl der übrigen angetriebenen Räder, deren Raddrehzahlsensoren funktionsfähig sind. D.h. die Abtriebsgeschwindigkeit $V_{Abtr}$ ergibt sich in Abhängigkeit der Abtriebsdrehzahl $n_{Abtr}$ und einem Umrechnungsfaktor zur Umrechnung von Umdrehungen je Minute (U/min) in Meter je Sekunde (m/s). Die Abtriebsgeschwindigkeit $V_{Abtr}$ entspricht dem Mittelwert der Radgeschwindigkeiten $V_{Radi}$ der angetriebenen Räder.

Bei einem Kraftfahrzeug mit Frontantrieb oder mit Heckantrieb wird die Ersatzgröße anhand der Gleichung

$$V_{RadDef} = 2 \cdot V_{Abtr} - V_{Rad}$$

ermittelt, wobei $V_{Rad}$ die Radgeschwindigkeit des anderen angetriebenen Rades ist, dessen Raddrehzahlsensor funktionsfähig ist.

Die wirksame Differentialübersetzung $I_{Diff}$ kann sich je nach Anstriebsart des Kraftfahrzeugs aus den Übersetzungen der Differentiale 6, 7 und/oder 8 zusammensetzen. Bei einem FWD setzt sie sich aus den beiden Differentialübersetzungen $I_{DiffQ}$ des vorderen Differentials 6 und $I_{DiffMitte}$ des mittleren Differentials 8 zusammen und bei einem RWD aus den beiden Differentialübersetzungen $I_{DiffQ'}$ des hinteren Differentials 7 und $I_{DiffMitte}$ des mittleren Differentials 8 zusammen. Bei einem AWD sind sämtliche Differentialübersetzungen $I_{DiffQ}$, $I_{DiffQ'}$ und $I_{DiffMitte}$ zu berücksichtigen. Die Differentialübersetzung $I_{Diff}$ ergibt sich dabei als Produkt aus den einzelnen Differentialübersetzungen. Eventuell ist eine wirksame Geländereduktion zu berücksichtigen.

Mit dem erfindungsgemäßen Verfahren kann bei einem nicht funktionsfähigen Raddrehzahlsensor 9, 10, 11 oder 12 für das Rad mit dem defekten Raddrehzahlsensor eine Ersatzgröße berechnet werden, die die Geschwindigkeit des Rades beschreibt. Somit ist eine Abschaltung eines kompletten Fahrdynamikregelsystems oder eines kompletten Antriebsschlupfregelsystems nicht mehr erforderlich. Es ist bspw. denkbar, eine ABS-Funktion, d.h. eine Antriebsschlupfregelung, die allein auf Bremseneingriffe beruht, mit einem defekten Raddrehzahlsensor 9, 10, 11 oder 12 bis zu einer bestimmten Fahrzeuggeschwindigkeit zu ermöglichen. Die Wahrscheinlichkeit des Ausfall des kompletten Fahrzeugs wird somit deutlich reduziert. Dies gilt insbesondere für Offroad-Fahrzeuge, bei denen die externen Raddrehzahlsensoren 9, 10, 11, 12 bei Geländefahrt einer besonders hohen äußeren Belastung ausgesetzt sind. Auch das Abschaltverhalten für den ABS-Fall, d.h.

die in der Fahrdynamikregelung enthaltene Bremsschlupfregelung, kann günstiger gestaltet werden.

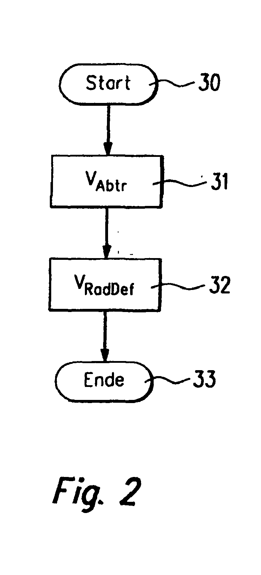

In Figur 2 ist ein Ablaufdiagramm des erfindungsgemäßen Verfahrens dargestellt. Das Verfahren beginnt in einem Funktionsblock 30. Nachfolgend wird davon ausgegangen, dass das Kraftfahrzeug einen Vorderradantrieb (FWD) aufweist und eine die Geschwindigkeit des Rades 2 beschreibende Ersatzgröße ermittelt werden soll. Dazu wird in einem Funktionsblock 31 zunächst eine auf die Radebene bezogene, die Abtriebsgeschwindigkeit $V_{Abtr}$ des Getriebes 5 beschreibende Größe ermittelt. Die Abtriebsgeschwindigkeitsgröße $V_{Abtr}$ wird in Abhängigkeit von der Getriebeabtriebsdrehzahl $n_{Abtr}$ nach folgender Gleichung ermittelt.

$$V_{Abtr} = \frac{\pi}{30} \cdot \frac{R_{Rad}}{I_{Diff}} \cdot n_{Abtr}$$

Anschließend wird in einem Funktionsblock 32 die die Geschwindigkeit $V_{RadDef} = V_{Rad2}$ des Rades 2 beschreibende Ersatzgröße anhand der nachfolgenden Gleichung ermittelt.

$$V_{RadDef} = 2 \cdot V_{Abtr} - V_{Rad}$$

Dabei ist $V_{Rad}$ die Geschwindigkeit des Rades 1 mit dem funktionsfähigen Drehzahlsensor 9. In einem Funktionsblock 33 ist das erfindungsgemäße Verfahren dann beendet.

Die anhand des erfindungsgemäßen Verfahrens ermittelte Radgeschwindigkeitsgröße $V_{RadDef}$ wird mit der Radgeschwindigkeit $V_{Rad2}$ verglichen, die anhand des Drehzahlsensors 10 des Rades 2 ermittelt wurde. Falls die Abweichungen der beiden Radgeschwindigkeiten einen vorgebbaren Schwellenwert überschreiten, wird von einer Funktionsstörung des Drehzahlsensors 10 ausgegangen. Natürlich kann die mit dem erfindungsgemäßen Verfahren herangezogene Radgeschwindigkeitsgröße $V_{RadDef}$ auch als Ersatzgröße für die Radgeschwindigkeit $V_{Rad2}$ des Rades 2 herangezogen werden, falls der Drehzahlsensor 10 defekt ist.

**Patentansprüche**

1. Verfahren zum Ermitteln einer die Geschwindigkeit ($V_{RadDef}$) mindestens eines angetriebenen Rades (1, 2, 3, 4) eines Kraftfahrzeugs beschreibenden Größe, bei dem für die übrigen angetriebenen Räder des Kraftfahrzeugs die jeweiligen Radgeschwindigkeiten ($V_{Radi}$) beschreibende Größen und eine die Abtriebsdrehzahl ($n_{Abtr}$) eines Getriebes (5) des Kraftfahrzeugs beschreibende Größe ermittelt werden, **dadurch gekennzeichnet, dass** für das mindestens eine angetriebene Rad (1, 2, 3, 4) die die Geschwindigkeit ($V_{RadDef}$) beschreibende Größe in Abhängigkeit der Größen, die die jeweiligen Radgeschwindigkeiten ($V_{Radi}$) der übrigen angetriebenen Räder beschreiben, und in Abhängigkeit der Größe ermittelt wird, die die Getriebeabtriebsdrehzahl ($n_{abtr}$) beschreibt.

2. Verfahren nach Anspruch 1, **dadurch gekennzeichnet, dass** in Abhängigkeit von der Getriebeabtriebsdrehzahl ($n_{Abtr}$) eine auf die Radebene bezogene, die Abtriebsgeschwindigkeit ($V_{Abtr}$) beschreibende Größe ermittelt wird und für das mindestens eine angetriebene Rad (1, 2, 3, 4) die die Geschwindigkeit ($V_{RadDef}$) beschreibende Größe in Abhängigkeit der Größen, die die jeweiligen Radgeschwindigkeiten ($V_{Radi}$) der übrigen angetriebenen Räder beschreiben, und in Abhängigkeit der Größe ermittelt wird, die die Abtriebsgeschwindigkeit ($V_{Abtr}$) beschreibt.

3. Verfahren nach Anspruch 2, **dadurch gekennzeichnet, dass** die auf die Radebene bezogene, die Abtriebsgeschwindigkeit ($V_{Abtr}$) beschreibende Größe anhand der Gleichung

$$V_{Abtr} = \frac{\pi}{30} \cdot \frac{R_{Rad}}{I_{Diff}} \cdot n_{Abtr}$$

ermittelt wird, wobei $R_{Rad}$ der Radius der Antriebsräder und $I_{Diff}$ wirksame (n) Differentialübersetzung (en) ist.

4. Verfahren nach Anspruch 2 oder 3, **dadurch gekennzeichnet, dass** bei einem Kraftfahrzeug mit Allradantrieb (AWD) für das mindestens eine angetriebene Rad (1, 2, 3, 4) die die Geschwindigkeit ($V_{RadDef}$) beschreibende Größe anhand der Gleichung

$$V_{RadDef} = 4 \cdot V_{Abtr} - \sum_{i=1}^{3} V_{Radi}$$

ermittelt wird.

5. Verfahren nach Anspruch 2 oder 3, **dadurch gekennzeichnet, dass** bei einem Kraftfahrzeug mit Frontantrieb (FWD) oder mit Heckantrieb (RWD) für das mindestens eine angetriebene Rad (1, 2, 3, 4) die die Geschwindigkeit ($V_{RadDef}$) beschreibende Größe anhand der Gleichung

$$V_{RadDef} = 2 \cdot V_{Abtr} - V_{Rad}$$

ermittelt wird, wobei $V_{Rad}$ die Radgeschwindigkeit des anderen angetriebenen Rades ist.

6. Vorrichtung zum Ermitteln einer die Geschwindigkeit ($V_{Radef}$) mindestens eines angetriebenen Rades (1, 2, 3, 4) eines Kraftfahrzeugs beschreibenden Größe, wobei die Vorrichtung Mittel (9, 10, 11, 12) zur Ermittlung von Größen für die übrigen angetriebenen Räder des Kraftfahrzeugs, die die jeweiligen Radgeschwindigkeiten ($V_{Radi}$) beschreiben, und Mittel (13) zur Ermittlung einer Größe aufweist, die die Abtriebsdrehzahl ($n_{Abtr}$) eines Getriebes (5) des Kraftfahrzeugs beschreibt, **dadurch gekennzeichnet, dass** die Vorrichtung für das mindestens eine angetriebene Rad (1, 2, 3, 4) die die Geschwindigkeit ($V_{RadDef}$) beschreibende Größe in Abhängigkeit der Größen, die die jeweiligen Radgeschwindigkeiten ($V_{Radi}$) der übrigen angetriebenen Räder beschreiben, und in Abhängigkeit der Größe ermittelt, die die Getriebeabtriebsdrehzahl ($n_{Abtr}$) beschreibt.

7. Vorrichtung nach Anspruch 6, **dadurch gekennzeichnet, dass** die Vorrichtung Mittel zur Ausführung eines Verfahrens nach einem der Ansprüche 2 bis 5 aufweist.

8. Steuergerät (14) für ein Antriebsschlupfregelsystem oder ein Fahrdynamikregelsystem eines Kraftfahrzeugs, das zur Regelung des Antriebsschlupfes bzw. der Fahrdynamik eine die Geschwindigkeit ($V_{RadDef}$) mindestens eines angetriebenen Rades (1, 2, 3, 4) des Kraftfahrzeugs beschreibende Größe ermittelt, wobei dem Steuergerät (14) für die übrigen angetriebenen Räder des Kraftfahrzeugs die jeweiligen Radgeschwindigkeiten ($V_{Radi}$) beschreibende Größen und eine die Abtriebsdrehzahl ($n_{Abtr}$) eines Getriebes (5) des Kraftfahrzeugs beschreibende Größe zur Verfügung stehen, **dadurch gekennzeichnet, dass** das Steuergerät (14) für das mindestens eine angetriebene Rad (1, 2, 3, 4) die die Geschwindigkeit ($V_{RadDef}$) beschreibende Größe in Abhängigkeit der Größen, die die jeweiligen Radgeschwindigkeiten ($V_{Radi}$) der übrigen angetriebenen Räder beschreiben, und in Abhängigkeit der Größe ermittelt, die die Getriebeabtriebsdrehzahl ($n_{Abtr}$) beschreibt.

9. Steuergerät (14) nach Anspruch 8, **dadurch gekennzeichnet, dass** in dem Steuergerät (14) Mittel zur Ausführung eines Verfahrens nach einem der Ansprüche 2 bis 5 realisiert sind.

10. Speicherelement (16), insbesondere Read-Only-Memory, Random-Access-Memory oder Flash-Memory, für ein Steuergerät (14) eines Antriebsschlupfregelsystems oder eines Fahrdynamikregelsystems eines Kraftfahrzeugs, auf dem ein Computerprogramm abgespeichert ist, das auf einem Rechengerät ablauffähig ist und das Steuergerät (14) zur Ausführung eines Verfahrens nach einem der Ansprüche 1 bis 5 veranlasst.

11. Computerprogramm, **dadurch gekennzeichnet, dass** das Computerprogramm ein Verfahren nach einem der Ansprüche 1 bis 5 ausführt, wenn es auf einem Rechengerät, insbesondere auf einem Mikroprozessor (17), abläuft.

12. Computerprogramm nach Anspruch 11, **dadurch gekennzeichnet, dass** das Computerprogramm auf einem Speicherelement (16), insbesondere auf einem Flash-Memory, abgespeichert ist.

**Claims**

1. Method for determining a parameter which describes the speed ($V_{wheeldef}$) of at least one driven wheel (1, 2, 3, 4) of a motor vehicle, in which method parameters which describe the respective wheel speeds ($V_{wheeli}$) for the other driven wheels of the motor vehicle and a parameter which describes the output speed ($n_{outp}$) of a gearbox (5) of a motor vehicle are determined,
**characterized in that** the parameter which describes the speed ($V_{wheeldef}$ for the at least one driven wheel (1, 2, 3, 4) is determined as a function of the parameters which describes the respective wheel speeds ($V_{wheeli}$) of the other driven wheels, and as a function of the parameter which describes the gearbox output speed ($n_{outp}$).

2. Method according to Claim 1, **characterized in that** a parameter which is referred to the plane of the wheel and which describes the output speed ($V_{outp}$) is determined as a function of the gearbox output speed ($n_{outp}$), and the parameter which describes the speed ($V_{wheeldef}$) is determined for the at least one driven wheel (1, 2, 3, 4) as a function of the parameters which describe the respective wheel speeds ($V_{wheeli}$) of the other driven wheels and as a function of the parameter which describes the output speed ($V_{outp}$).

3. Method according to Claim 2, **characterized in that** the parameter which is referred to the plane of the wheel and which describes the output speed ($V_{outp}$) is determined by means of the equation

$$V_{outp} = \frac{\pi}{30} \cdot \frac{R_{wheel}}{I_{diff}} \cdot n_{outp}$$

where $R_{wheel}$ is the radius of the driven wheels and $I_{diff}$ is the effective differential transmission ratio or ratios.

4. Method according to Claim 2 or 3, **characterized in that**, in a motor vehicle with all-wheel drive (AWD), the parameter which describes the speed ($V_{wheeldef}$) is determined for the at least one driven wheel (1, 2, 3, 4) by means of the equation

$$V_{wheeldef} = 4 \cdot V_{outp} - \sum_{i=1}^{3} V_{wheel}$$

5. Method according to Claim 2 or 3, **characterized in that** in a motor vehicle having front-wheel drive (FWD) or with rear-wheel drive (RWD) for the at least one driven wheel (1, 2, 3, 4) the parameter which describes the speed ($V_{wheeldef}$) is determined by means of the equation

$$V_{wheeldef} = 2 \cdot V_{outp} - V_{wheel}$$

where $V_{wheel}$ is the wheel speed of the other driven wheel.

6. Device for determining a parameter which describes the speed ($V_{wheeldef}$) of at least one driven wheel (1, 2, 3, 4) of a motor vehicle, wherein the device has means (9, 10, 11, 12) for determining parameters for the other driven wheels of the motor vehicle which describe the respective wheel speeds ($V_{Wheeli}$) , and means (13) for determining a parameter which describes the output speed ($n_{outp}$) of a gearbox (5) of the motor vehicle, **characterized in that** the device determines the parameter which describes the speed ($V_{wheeldef}$) for the at least one driven wheel (1, 2, 3, 4) as a function of the parameters which describe the respective wheel speeds ($V_{wheeli}$ of the other driven wheels, and as a function of the parameter which describes the gearbox output speed ($n_{outp}$) .

7. Device according to Claim 6, **characterized in that** the device has means for carrying out a method according to one of Claims 2 to 5.

8. Control unit (14) for a traction control system or a vehicle movement dynamics control system of a motor vehicle which, in order to control the traction slip or the vehicle movement dynamics, determines a parameter which describes the speed ($V_{wheeldef}$) of at least one driven wheel (1, 2, 3, 4) of the motor vehicle, wherein the parameters which describe the respective wheel speeds ($V_{wheeli}$) and a parameter which describes the output speed ($n_{outp}$) of a gearbox (5) of the motor vehicle are available to the control unit (14) for the other driven wheels, **characterized in that** the control unit (14) for the at least one driven wheel (1, 2, 3, 4) determines the parameter which describes the speed ($V_{wheeldef}$), as a function of the parameters which describe the respective wheel speeds ($V_{wheeli}$) of the other driven wheels and as a function of the parameter which describes the gearbox output speed ($n_{outp}$).

9. Control unit (14) according to Claim 8, **characterized in that** means for carrying out a method according to one of Claims 2 to 5 are implemented in the control unit (14).

10. Memory element (16), in particular read-only memory, random-access memory or flash memory, for a control unit (14) of a traction control system or of a vehicle movement dynamics control system of a motor vehicle, on which a computer program is stored, which computer program can run on a computing unit and induces the control unit (14) to carry out a method according to one of Claims 1 to 5.

11. Computer program, **characterized in that** the computer program carries out a method according to one of Claims 1 to 5 when it runs on a computing unit, in particular on a microprocessor (17).

12. Computer program according to Claim 11 **characterized in that** the computer program is saved on a memory element (16), in particular on a flash memory.

**Revendications**

1. Procédé de détermination d'une grandeur qui décrit la vitesse ($V_{RadDef}$) d'au moins une roue motrice (1, 2, 3, 4) d'un véhicule automobile, dans lequel les grandeurs qui décrivent la vitesse ($V_{Radi}$) des autres roues motrices respectives du véhicule automobile et une grandeur qui décrit le régime de rotation de sortie ($n_{Abtr}$) de la transmission (5) du véhicule automobile sont déterminées,
**caractérisé en ce que**
la grandeur qui décrit la vitesse ($V_{RadDef}$) de la ou des roues motrices (1, 2, 3, 4) est déterminée en fonction des grandeurs qui décrivent la vitesse respective ($V_{Radi}$) des autres roues motrices et en fonction de la grandeur qui décrit le régime de rotation de sortie ($n_{abtr}$) de la transmission.

**2.** Procédé selon la revendication 1, **caractérisé en ce qu'**une grandeur rapportée au plan des roues et qui décrit la vitesse de sortie ($V_{Abtr}$) en fonction du régime de rotation de sortie ($n_{Abtr}$) de la transmission est déterminée et **en ce que** la grandeur qui décrit la vitesse ($V_{RadDef}$) de la ou des roues motrices (1, 2, 3, 4) est déterminée en fonction des grandeurs qui décrivent la vitesse respective ($V_{Radi}$) des autres roues motrices et en fonction de la grandeur qui décrit la vitesse de sortie ($V_{Abtr}$) de la transmission.

**3.** Procédé selon la revendication 2, **caractérisé en ce que** la grandeur rapportée au plan de la roue et décrivant la vitesse ($V_{Abtr}$) de sortie de transmission est déterminée à l'aide de l'équation

$$V_{Abtr} = \frac{\pi}{30} \cdot \frac{R_{Rad}}{I_{Diff}} \cdot n_{Abtr}$$

dans laquelle $R_{Rad}$ représente le rayon des roues motrices et $I_{Diff}$ le ou les rapports de transmission actifs.

**4.** Procédé selon les revendications 2 ou 3, **caractérisé en ce que** sur un véhicule dont toutes les roues sont motrices (AWD), la grandeur qui décrit la vitesse ($V_{RadDef}$) de la ou des roues motrices (1, 2, 3, 4) est déterminée à l'aide de l'équation

$$V_{RadDef} = 4 V_{Abtr} - \sum_{i=1}^{3} V_{Radi}$$

**5.** Procédé selon les revendications 2 ou 3, **caractérisé en ce que** sur un véhicule à roues motrices avant (FWD) ou à roues motrices arrière (RWD), la grandeur qui décrit la vitesse ($V_{RadDef}$) de la ou des roues motrices (1, 2, 3, 4) est déterminée à l'aide de l'équation

$$V_{RadDef} = 2 \cdot V_{Abtr} - V_{Rad}$$

dans laquelle $V_{Rad}$ est la vitesse de l'autre roue motrice.

**6.** Dispositif de détermination d'au moins une grandeur qui décrit la vitesse ($U_{RadDef}$) d'au moins une roue motrice (1, 2, 3, 4) d'un véhicule automobile, le dispositif présentant des moyens (9, 10, 11, 12) de détermination de grandeurs qui décrivent la vitesse respective ($V_{Radi}$) des autres roues motrices du véhicule automobile et des moyens (13) qui déterminent une grandeur qui décrit le régime de rotation de sortie ($n_{abtr}$) de la transmission (5) du véhicule automobile, **caractérisé en ce que** le dispositif détermine la grandeur qui décrit la vitesse ($U_{RadDef}$) de la ou des roues motrices (1, 2, 3, 4) en fonction des grandeurs qui décrivent la vitesse respective ($U_{Radi}$) des autres roues motrices et en fonction de la grandeur qui décrit le régime de rotation de sortie ($n_{Abtr}$) de la transmission.

**7.** Dispositif selon la revendication 6, **caractérisé en ce que** le dispositif présente des moyens en vue de la mise en oeuvre d'un procédé selon l'une des revendications 2 à 5.

**8.** Appareil de commande (14) d'un système de régulation du patinage d'entraînement ou d'un système de régulation dynamique du roulage d'un véhicule automobile, qui détermine une grandeur qui décrit la vitesse ($V_{RadDef}$) d'au moins une roue motrice (1, 2, 3, 4) du véhicule automobile pour réguler le patinage d'entraînement ou la dynamique du roulage, l'appareil de commande (14) disposant de grandeurs qui décrivent la vitesse respective ($V_{Radi}$) de chacune des autres roues motrices du véhicule automobile et d'une grandeur qui décrit le régime de rotation de sortie ($n_{Abtr}$) de la transmission (5) du véhicule automobile, **caractérisé en ce que** l'appareil de commande (14) détermine la grandeur qui décrit la vitesse ($V_{RadDef}$) de la ou des roues motrices (1, 2, 3, 4) en fonction des grandeurs qui décrivent la vitesse respective ($V_{Radi}$) de chacune des autres roues motrices et en fonction de la grandeur qui décrit le régime de rotation de sortie ($n_{Abtr}$) de la transmission.

**9.** Appareil de commande (14) selon la revendication 8, **caractérisé en ce que** des moyens de mise en oeuvre d'un procédé selon l'une des revendications 2 à 4 sont prévus dans l'appareil de commande (14).

**10.** Elément de mémoire (16), en particulier mémoire morte, mémoire vive ou mémoire flash, pour un appareil de commande (14) d'un système de régulation du patinage d'entraînement ou d'un système de régulation de la dynamique de roulage d'un véhicule automobile, sur lequel est conservé un programme informatique qui peut être exécuté par un appareil de calcul et qui permet à l'appareil de commande (14) de mettre en oeuvre un procédé selon l'une des revendications 1 à 5.

**11.** Programme informatique, **caractérisé en ce que** le programme informatique met en oeuvre un procédé selon l'une des revendications 1 à 5 lorsqu'il est exécuté par un appareil de calcul, en particulier un microprocesseur (17).

12. Programme informatique selon la revendication 11, **caractérisé en ce que** le programme informatique est conservé sur un élément de mémoire (16) et en particulier sur une mémoire flash.

Fig. 1

Start $\quad$ 30

$V_{Abtr}$ $\quad$ 31

$V_{RadDef}$ $\quad$ 32

Ende $\quad$ 33

# Fig. 2

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 19610864 A1

- DE 19726743 A1

**In der Beschreibung aufgeführte Nicht-Patentliteratur**

- *Automobiltechnischen Zeitschrift (ATZ),* 1994, vol. 96, 674-689